(19) Europäisches Patentamt
European Patent Office
Office européen des brevets

(11) EP 1 227 565 A1

(12) EUROPEAN PATENT APPLICATION

(43) Date of publication:
**31.07.2002 Bulletin 2002/31**

(51) Int Cl.7: **H02J 9/06**

(21) Application number: **01101580.7**

(22) Date of filing: **25.01.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Marconi Communications GmbH**
**71522 Backnang (DE)**

(72) Inventors:
- **Fila, Emil Klaus**
**01454 Radeberg (DE)**
- **Scharf, Dietmar**
**01796 Pirna (DE)**

(74) Representative: **Webb, Peter Reginald**
**Marconi Intellectual Property**
**Marrable House**
**The Vineyards**
**Gt. Baddow**
**Chelmsford Essex CM2 7QS (GB)**

(54) **Power-supply arrangement**

(57) A power-supply arrangement comprises a transformer having first and second primaries and first and second secondaries on a common core, the primaries being fed by first and second power-sources, respectively, and the secondaries feeding first and second loads, respectively. The sources drive the primaries through a switch arrangement on a TDM basis, such that (a) when the first source (mains) is healthy, energy from that source is used to charge the magnetic circuit of the transformer, that energy being then transferred to the first load (an S0 bus), while in a separate time-period energy from the second source (a Uk0 bus) is used to charge the magnetic circuit, that energy being then transferred to the second load (Vcc of a transmission interface section), and (b) when the first source drops out, energy from the second source is used to charge the magnetic circuit and thereafter the magnetic circuit is discharged into both first and second loads. The first load (S0) may be reduced in this case. The charging/discharging operations are carried out on a continuous basis.

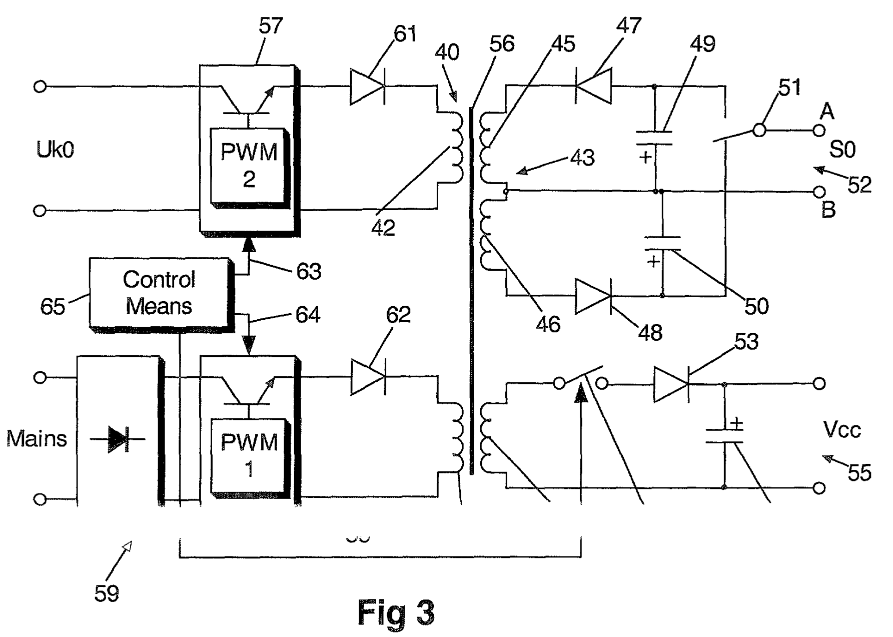


**Fig 3**

EP 1 227 565 A1

Printed by Jouve, 75001 PARIS (FR)

## Description

The invention relates to a method for supplying power to first and second loads from first and second power-sources and a corresponding power-supply arrangement. It is particularly, but not exclusively, applicable to an ISDN NT (network termination) setting.

Network termination arrangements are known which link a network operator, operating on ISDN for example, with a subscriber network. While the former is usually a public system, the latter will normally be a private network. An example of such an arrangement is illustrated in Figure 1, in which an NTBA (network terminator basic connection) 10 acts as an interface between a 2-wire Uk0 bus system 11 (currently used only in Germany) and the internationally standardised S0 4-wire bus system 12. The S0 bus 12 feeds data to and receives data from a number of host devices 13, 14, 15 which, during normal operation, receive their operating voltage from a mains-powered system 16. Also during normal operation, the data-transmission part 17 of the NTBA 10 receives a 5V supply (Vcc) 18 from its own dedicated power supply (part of the Power Supplies block 19), which is fed in turn from the Uk0 bus.

It is not unknown for the mains supply 16 to drop out, leaving the devices 13-15 non-operational on the bus 12. Because of this, and to provide some restricted functionality on the S0 bus, it is normal practice under these conditions to derive from the Uk0 bus a backup supply of less-than-normal power rating, which is arranged to maintain operation on at least one host device. In Figure 1 it is the telephone device 13 which is shown powered, under mains-failure, from the Uk0 bus 11.

The NTBA 10 is shown in greater detail in Figure 2. Here bi-directional data flow between the two different bus systems is ensured by the inclusion of the suitably designed transmission interface 17 (not in itself part of the present invention, and therefore not addressed in greater detail in this specification), which is interfaced to the two buses Uk0 and S0 by respective transformer arrangements 20, 21. The nominal operating-voltage range of the Uk0 bus is 28-115V, while the S0 bus runs at a nominal 40V.

Supplying the 40V for the S0 bus is an AC-DC converter 22 fed from a mains AC supply of between, nominally, 180 and 264V. The output of the converter 22 is taken via a switch arrangement 23, which may in practice take the form of relay contacts or solid-state switches 29, to centre-taps 24 of the transformer section 21, thereby providing at the outputs 25 and 26 the negative and positive poles, respectively, of the 40V supply, each pole having superimposed thereon data signals from the transmission section 17.

The Vcc supply for the transmission section 17 is delivered by a DC-DC converter 27 which takes the Uk0 voltage at its input and converts it into a nominal 5V at its output. Also provided by the converter 27 is a 40V supply 28, which goes to the other pole of the changeover switches 29 so that, when the switches 29 change over, the S0 bus is fed from that supply, not from the mains-derived supply at 22. In this case, however, the S0 bus is fed in the opposite sense due to the reversed polarity configuration of the output lines 28. Governing the switching of the switches 29 is a sensor (not shown) which detects the dropout of the mains supply.

A significant drawback with this known arrangement is the need for separate inductive components in the converters 22, 27. Not only are such components expensive minimum of 3 kV between all interfaces)), but they also take up significant space in the NTBA unit 10.

In accordance with a first aspect of the invention there is provided a power-supply arrangement as specified in Claim 1 and, under a further aspect of the invention, a method for supplying power to first and second loads from first and second power sources, as specified in Claim 21.

Specific realisations of the two aspects of the invention are contained in the respective sets of subclaims.

Embodiments of the invention will now be described, by way of example only, with reference to the drawings, of which:

Figure 1 is a schematic overview of a typical known network interface arrangement;
Figure 2 is a simplified circuit diagram of an NTBA interface unit incorporating a known power-supply arrangement;
Figure 3 is a circuit diagram of an embodiment of a power-supply arrangement according to the invention;
Figure 4 is a graph of a transformer-drive control scheme employed during normal-mode operation of a power-supply arrangement according to the invention;
Figures 5, 6 and 7 illustrate three possible voltage-regulation methods which may be implemented in a power-supply arrangement according to the invention;
Figures 8, 9 and 10 are graphs of three different transformer-drive control schemes employable during restricted-mode operation of a power-supply arrangement according to the invention;
Figure 11 is a modified version of Figure 5 for use in a "restricted" mode of operation of the invention;
Figure 12 is a modified version of Figure 7 for use in a "restricted" mode of operation of the invention, and
Figure 13 is a circuit diagram of an alternative rectification arrangement for the derivation of an S0 supply voltage.

Referring now to Figure 3, a power-supply arrangement according to the invention employs a single inductive

component 40 having separate first and second primary-winding means 41, 42 and first and second secondary-winding means 43, 44. The primary-winding means and the second secondary-winding means are single windings, whereas the first secondary-winding means 43 comprises a pair of series-connected windings 45, 46. The first secondary windings 45, 46 feed a bi-phase rectification arrangement comprising respective and oppositively configured rectifiers 47, 48 and respective smoothing capacitors 49, 50. A switch 51, which again may be a solid-state device or a set of relay contacts, delivers 40V at either of two polarities at the output 52, depending on the position of the switch 51. The two poles A and B of the output 52 feed into the respective centre-taps 24 of the transformer arrangement 21 shown in Figure 2. Thus the Figure 3 arrangement replaces the converters 22, 27 and switch arrangement 23 of Figure 2. Finally on the secondary side, the winding 44 feeds a single-phase rectifier section composed of a rectifier-diode 53 and a smoothing capacitor 54 to deliver 5V on the output 55. Magnetically coupling all the windings is a common core 56.

On the primary side, the winding 42 is pulse-width-modulation driven by pulses Likewise winding 41 is pulse-width-modulation driven from PWM circuit 58, but in this case the PWM circuit is driven from a rectified mains supply 59.

In order to ensure that the correct voltage levels appear at the appropriate outputs 52, 55, the PWM circuits 57, 58 are controlled via a control means 65 in accordance with a time-division-multiplexing (TDM) scheme. An example of this is illustrated in Figure 4, which relates to a normal mode of operation of the power supply. In this normal mode, energy is transmitted in a first cycle from the mains supply via the PWM circuit 58 and windings 41 and 46 to the S0 bus load at output 52, while in a second cycle energy is transmitted from the Uk0 bus via the PWM circuit 57 and windings 42 and 44 to the Vcc output 55. Both cycles occur within a given time-period *T*, the second cycle commencing at the half-*T* point in the illustrated preferred arrangement. These two cycles are performed on a continuous basis.

Looking at the two cycles in more detail, the first cycle is divided into two consecutive time-periods: a first period $k_1T$, in which energy is taken from the mains to charge the magnetic circuit via the winding 41, and a second period $k_2T$, in which that stored energy is discharged into the load on the S0 bus. Likewise the second cycle also is divided into two consecutive time-periods: a first period $k_3T$, in which energy from the Uk0 bus is used to charge the magnetic circuit via the winding 42, and a second period $k_4T$, in which that stored energy is discharged into the NTBA load connected to the Vcc line. The various $k_n$ satisfy the relationship:

$$\sum_{n=1}^{4} k_n \leq 1$$

$$0 \leq k_n \leq \frac{1}{4}.$$

This latter condition is not essential, but it does enable the realisation of the control means and PWM section to be somewhat simpler than would otherwise be the case, inasmuch as it allows the pulse widths to be derived from a fixed clock via a divider.

In order that some of the energy transferred in the first cycle may not be diverted to the Vcc output 55, a switch device 60 is included in series with the secondary winding 44, this device being open during the first cycle. In addition, so that similarly undesired energy transfer do not take place in the form of a cross-coupling between the two primaries 41, 42, some form of blocking arrangement (here shown purely schematically as diodes 61, 62) is included in series with the primaries.

As regards output-voltage regulation, the 40V output can be monitored and used to control the width of the pulses generated in the PWM 58 via the control means 65 operating through the PWM control-input 64, and similarly the Vcc voltage can be monitored and used to control pulse-width in the PWM 57 via control means 65 and the control-input 63. Thus two separate feedback loops may be employed. This situation is shown in Figure 5, in which two separate comparators 70, 71 have inputs connected to respective 5V/40V reference voltages on the one hand, and to respective Vcc/S0 outputs on the other. Alternatively, the Vcc feedback loop only may be employed, with the 40V supply allowed to float unregulated, although the 40V supply may be postregulated before it reaches the S0 bus, if desired. This latter scenario is illustrated in Figure 6, the separate regulator being shown as item 72 in series with the S0 output of the NTBA power arrangement. Where a regulator 72 is not employed reliance is placed upon the existence of a suitable turns ratio between winding 45/46 and winding 44 to give rise to an approximately correct 40V level at the S0 output. Where a regulator 72 is used, this turns ratio should be increased to provide the regulator with sufficient "headroom". As a still further realisation of regulation (see Figure 7), a single feedback circuit may be switched between each of the two outputs and their respective PWM-circuit control inputs. Analogous switching must also occur on one of the inputs of the comparator 73 between the 5V and 40V references. The switch poles 74a, b and c are shown in the "cycle 2" position, in which Vcc is being monitored. They are changed over for the first cycle.

Although in the various feedback scenarios illustrated the feedback loops appear as a simple comparator, in

practice they will contain other elements necessary to the proper operation of such feedback circuits, notably some form of filtering (normally low-pass).

What has so far been described is the operation of the power-supply arrangement during "normal" operation in which the mains supply voltage lies between the correct limits (in the illustrated case, between 180 and 264V). Where the mains voltage drops below this minimum level (or maybe drops out altogether), the power-supply control means switches over to "restricted" mode, in which a single S0-bus device is provided with power and thereby kept running. (It would be possible to supply more than one device, if desired, though this would impose correspondingly greater demands on the power-supply design). On switch-over, the state of the switch 51 (see Figure 3) is changed over, so as to reverse the polarity of the voltage on the S0 bus, and the control of the PWM circuits 57, 58 is modified, as will now be described.

Referring to Figure 8, in a preferred embodiment no energy is now stored in the magnetic circuit during the first cycle, but during the second cycle energy is transferred Vcc and S0 loads during interval $k_4'T$. As before, preferably $0 \le k3', k4' \le ¼$. Voltage regulation by feedback can occur in this mode for the Vcc load only, though as before the S0 load may be postregulated by means of an additional regulator 72 (Figure 6).

This realisation of the control arrangement has the advantage of simplicity, since a single, fixed feedback arrangement is employed. It has, however, the drawback that a high current will be drawn during time-interval $k_3'T$, since energy is being stored for both the Vcc and restricted S0 loads.

A second scheme is illustrated in Figure 9 and comprises allowing the magnetic charge-plus-discharge operations to occur over most of the overall time-interval $T$. Thus now charging of the magnetic circuit takes place over time-period $k_5T$, while discharging occurs over period $k_6T$. In this case, ideally $0 \le k_5, k_6 \le ½$. The regulation possibilities are the same as for the Figure 8 case, but this time peak charging current is reduced, thereby improving efficiency.

In Figure 10 a third arrangement involves having, as in normal mode, two separate cycles, cycle 1' and cycle 2', for the transfer of energy from Uk0 to the limited S0 load and from Uk0 to the Vcc load, respectively. These two different energy transfers are denoted W5 and W6, respectively, and break down into respective magnetic charging times $k_7T$ and $k_9T$, respectively, and magnetic discharging times $k_8T$ and $k_{10}T$, respectively. As in the case of normal mode, preferably $0 \le k_n \le ¼$. The possibilities for regulation are now essentially the same as for normal mode, i.e. they include the arrangement of Figure 6 and also slightly modified version of Figures 5 and 7, namely Figures 11 and 12. In both Figures 11 and 12 account is taken of the fact that only the PWM2 control input is being driven, since the comparators 70, 71 are taken to a changeover switching device 75, which switches over in synchrony with the alternation of the two cycles, cycles 1' and 2' in Figure 10. In Figure 12 the output of comparator 73 is permanently tied to the PWM2 control input.

Again, because charging of the magnetic circuit is spread out over more of the time-interval $T$, charging current is lower and the efficiency higher.

The three realisations illustrated in Figures 8, 9 and 10 are related in that W3 in Figure 8 is approximately the same area as W4 in Figure 9 and W5 + W6 in Figure 10.

In the various regulation arrangements described above the regulating action will normally occur during the magnetic-circuit charging phases (e.g. $k_1T$, $k_3T$, $k_7T$, $k_9T$).

While the embodiment of the invention shown in Figure 3 has assumed the use of, on the one hand, PWM to drive the primaries and bi-phase and single-phase rectification downstream of the respective secondaries 45/46 and 44, in practice other techniques may be employed. Thus, for instance, a PPM (pulse-position modulation) scheme may be implemented instead of PWM and full-wave bridge rectification may be used on the two secondaries or a single-phase scheme may be employed on the S0 secondary side as well as on the Vcc secondary side, or the illustrated bi-phase scheme may be kept for the S0 side, while a full-wave bridge scheme is employed on the Vcc side. An exemplary bridge-rectification arrangement on the S0 side is shown in Figure 13, in which the secondary-winding means 43 (see Figure 3) now consists of only one winding feeding the AC-side of a bridge rectifier 81. The DC-side of the rectifier 81 supplies a smoothing capacitor 82, as before, and the thereby rectified and smoothed DC voltage is taken to the S0 output A, B of the power-supply arrangement by way of switches 83, 84. Changeover of the switches

Although the power-supply arrangement of the invention has been described above in connection with a network-termination system, it may also be employed in other applications in which two separate loads are to be driven from two separate power-sources under normal operation, and from only one of the sources in another mode of operation. The invention achieves this in an arrangement which combines all energy transfer functions in a single transformer using a transformer-drive scheme as described.

## Claims

1. A power-supply arrangement comprising: first and second power-source inputs for receipt of respective first and second power sources (mains, Uk0) and coupled through respective first and second switch means (58, 57) to

respective first and second primary-winding means (41, 42); first and second power outputs (52, 55) for feeding respective first and second loads (S0, Vcc) and coupled to respective first and second secondary-winding means (43, 44); a common core (56) in magnetic-coupling relationship with said first and second primary and first and second secondary winding-means, thereby to provide a magnetic circuit, and a control means (65) connected to said first and second switch means and configured such that, in use:

(a) where the first power-source (mains) is above a given threshold value, in two separate phases within a time-interval T power is transferred from the first power-source (mains) to the first load (S0) and from the second power-source (Uk0) to the second load (Vcc), and
(b) where the first power-source (mains) is below the given threshold value, within said time-interval *T* power is transferred from the second power-source (Uk0) to the first load (S0) and to the second load (Vcc), no power being transferred from the first power-source (mains).

**2.** Arrangement as claimed in Claim 1, wherein the time-interval T is repeated continuously.

**3.** Arrangement as claimed in Claim 2, wherein the control means (65) is configured such that, in use in condition (a), in a first part, $k_1T$, of the time-interval *T,* the magnetic circuit is charged with energy from the first power-source (mains); in a second part, $k_2T$, the magnetic circuit discharges into the first load (S0); in a third part, $k_3T$, the magnetic circuit is charged with energy from the second power-source (Uk0) and in a fourth part, $k_4T$, the magnetic circuit discharges into the second load (Vcc), wherein

$$\sum_{n=1}^{4} k_n \leq 1$$

**4.** Arrangement as claimed in Claim 3, wherein $0 \leq k_n \leq ¼$.

**5.** Arrangement as claimed in Claim 2 or Claim 3, wherein the control means (65) is configured such that, in use in condition (b), energy from the second power-source (Uk0) is transferred to the magnetic circuit over a first fraction of the time-interval *T* and the magnetic circuit then discharged into the first and second loads (S0, Vcc) over a second fraction of the time-interval *T*.

**6.** Arrangement as claimed in Claim 5, wherein under condition (b) the energy which is discharged into the first and second loads (S0, Vcc) is discharged into the two loads simultaneously over said second fraction ($k_4'T$, $k_6T$) of the time-period.

**7.** Arrangement as claimed in Claim 6, wherein said first and second fractions of the

**8.** Arrangement as claimed in Claim 7, wherein the first and second fractions each lie between 0 and ¼.

**9.** Arrangement as claimed in Claim 6, wherein the first and second fractions of the time-interval *T* together correspond to more than one-half said time-interval *T.*

**10.** Arrangement as claimed in Claim 9, wherein the first and second fractions each lie between 0 and ½.

**11.** Arrangement as claimed in Claim 5, wherein the control means is configured such that, in use under condition (b), in a first part, $k_7T$, of the time-interval *T,* the magnetic circuit is charged with energy from the second power-source (Uk0); in a second part, $k_8T$, the magnetic circuit discharges into the first load (S0); in a third part, $k_9T$, the magnetic circuit is charged with energy from the second power-source (Uk0) and in a fourth part, $k_{10}T$, the magnetic circuit discharges into the second load (Vcc), wherein

$$\sum_{n=7}^{10} k_n \leq 1$$

**12.** Arrangement as claimed in Claim11, wherein $0 \leq k_n \leq \frac{1}{4}$.

**13.** Arrangement as claimed in any one of the preceding claims, wherein the second secondary-winding means (44) is coupled to the second power output (55) through a third switch means (60), the third switch means being open while power is being transferred from the first power-source (mains) to the first load (S0) under condition (a).

**14.** Arrangement as claimed in any one of the preceding claims, wherein the first and second primary-winding means (41, 42) have associated therewith respective blocking means for preventing inverse operation through mutual cross-coupling between the primary-winding means.

**15.** Arrangement as claimed in Claim 14, wherein the first and second blocking means comprise respective diodes (62, 61) in series with the respective primary-winding means.

**16.** Arrangement as claimed in Claim 3, wherein the durations of the first and third parts $k_1T$, $k_3T$ of the time-interval $T$ are controlled by means of a feedback arrangement which compares actual values of electrical quantities associated with the first and second power outputs, respectively, with respective desired values of those quantities.

**17.** Arrangement as claimed in Claim 8, wherein, under condition (b), the durations of the first and third parts $k_7T$, $k_9T$ of the time-interval $T$ are controlled by means of a feedback arrangement which compares actual electrical quantities associated with the first and second power outputs, respectively, with respective desired values of those quantities.

**18.** Arrangement as claimed in any one of the preceding claims, wherein, in use, under

**19.** Arrangement as claimed in Claim 18, wherein a voltage on the first power output (S0) in condition (b) is of opposite polarity to a voltage on the first power output (S0) in condition (a).

**20.** Arrangement as claimed in Claim 19, wherein the mains supply threshold is approximately 180V, the first power-source voltage level range is, under both conditions (a) and (b), approximately 28-115V, the absolute value of the first-load voltage level (S0) is, under both conditions (a) and (b), approximately 40V and the second-load voltage level (Vcc) is, under both conditions (a) and (b), approximately 5V.

**21.** Arrangement as claimed in Claim 19, wherein the power consumption of the first load (S0) is <4.5W and <410mW under conditions (a) and (b), respectively, and the power consumption of the second load (Vcc) is approximately 360mW under both conditions (a) and (b).

**22.** Arrangement as claimed in Claim 21, wherein the first and second power sources are a mains supply and a Uk0 interface, respectively, and the first and second loads include, respectively, devices connected to an S0 bus and circuitry for converting signals between Uk0 and S0 formats.

**23.** Arrangement as claimed in any one of the preceding claims, wherein the power-

**24.** Power-supply arrangement substantially as shown in, or as hereinbefore described with reference to, Figure 3 and, for "normal mode" Figure 4 in conjunction with any of Figures 5 to 7 and, for "restricted mode", Figure 8 or 9 in conjunction with Figure 6 or Figure 10 in conjunction with any of Figures 6, 11 or 12.

**25.** Method of supplying power to first and second loads from first and second power-sources, the method comprising:

(a) in a condition in which a parameter associated with the first power-source is above a threshold value, transferring power in two separate phases within a time-interval T from the first power-source (mains) to the first load (S0) and from the second power-source (Uk0) to the second load (Vcc);
(b) in a condition in which said parameter is below the threshold value, within said time-interval T transferring power from the second power-source (Uk0) to the first and second loads (S0, Vcc) without transferring power from the first power-source (mains).

**26.** Method as claimed in Claim 25, wherein the time-interval T is continuously repeated.

**27.** Method for supplying power to first and second loads from first and second power-sources, substantially as here-

inbefore described.

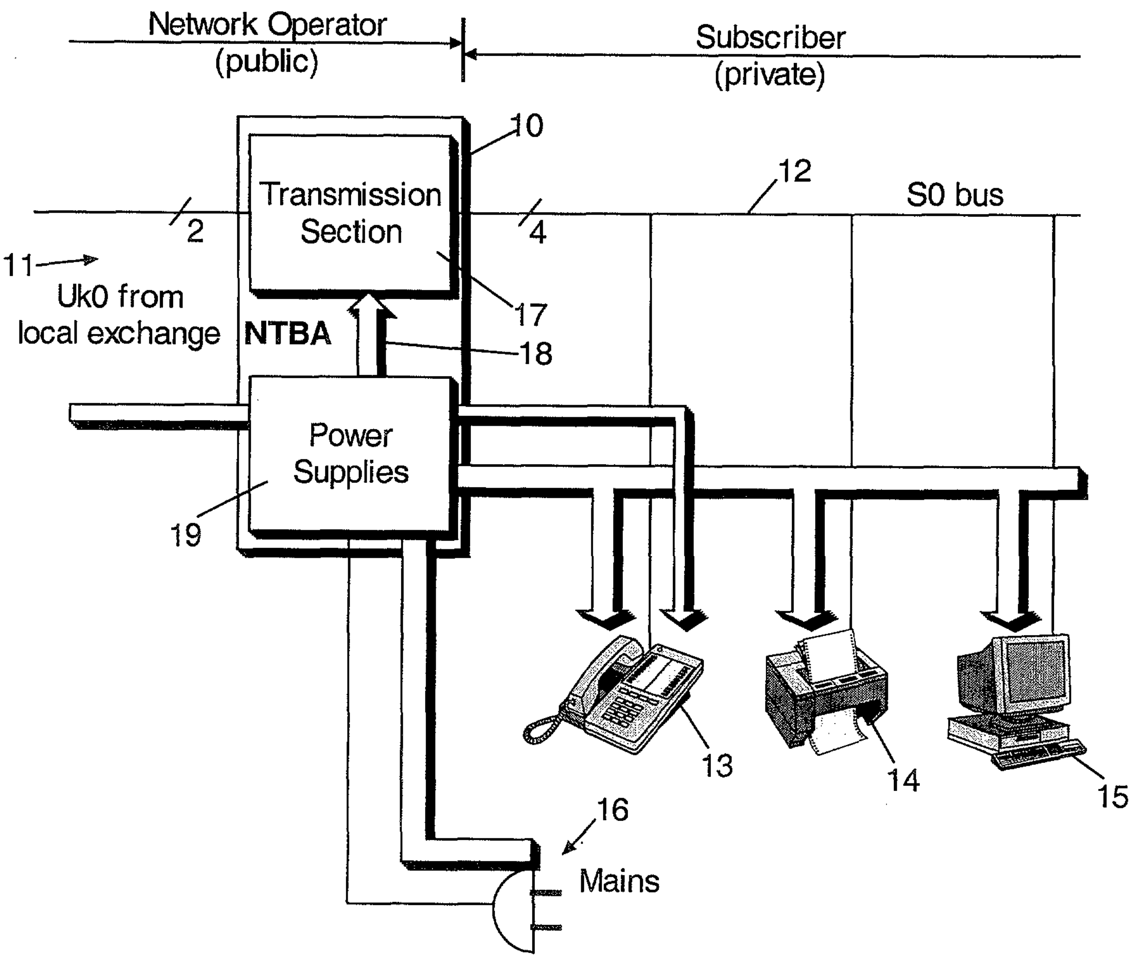
Network Operator
(public)
Subscriber
(private)
10
12
S0 bus
Transmission
Section
2
4
11
Uk0 from
local exchange
NTBA
17
18
Power
Supplies
19
13
14
15
16
Mains

Fig 1

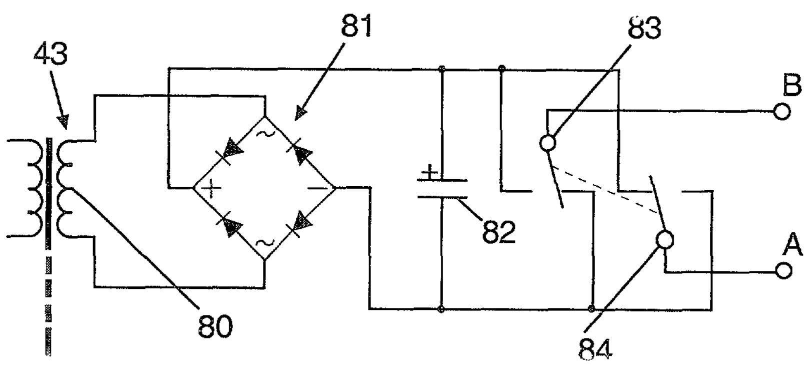
43
81
83
B
A
82
80
84

Fig 13

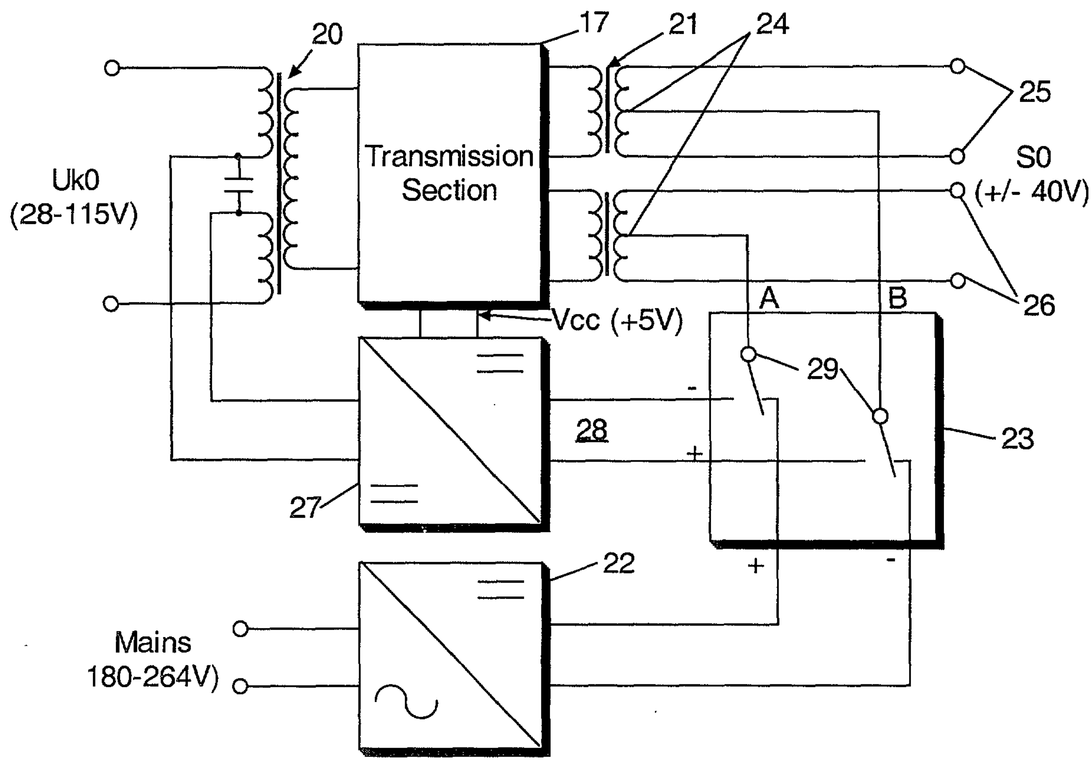
20
17
21
24
25
S0
(+/- 40V)
26
Uk0
(28-115V)
Transmission
Section
Vcc (+5V)
A
B
29
28
23
27
22
Mains
180-264V)
-
+
+
-

Fig 2

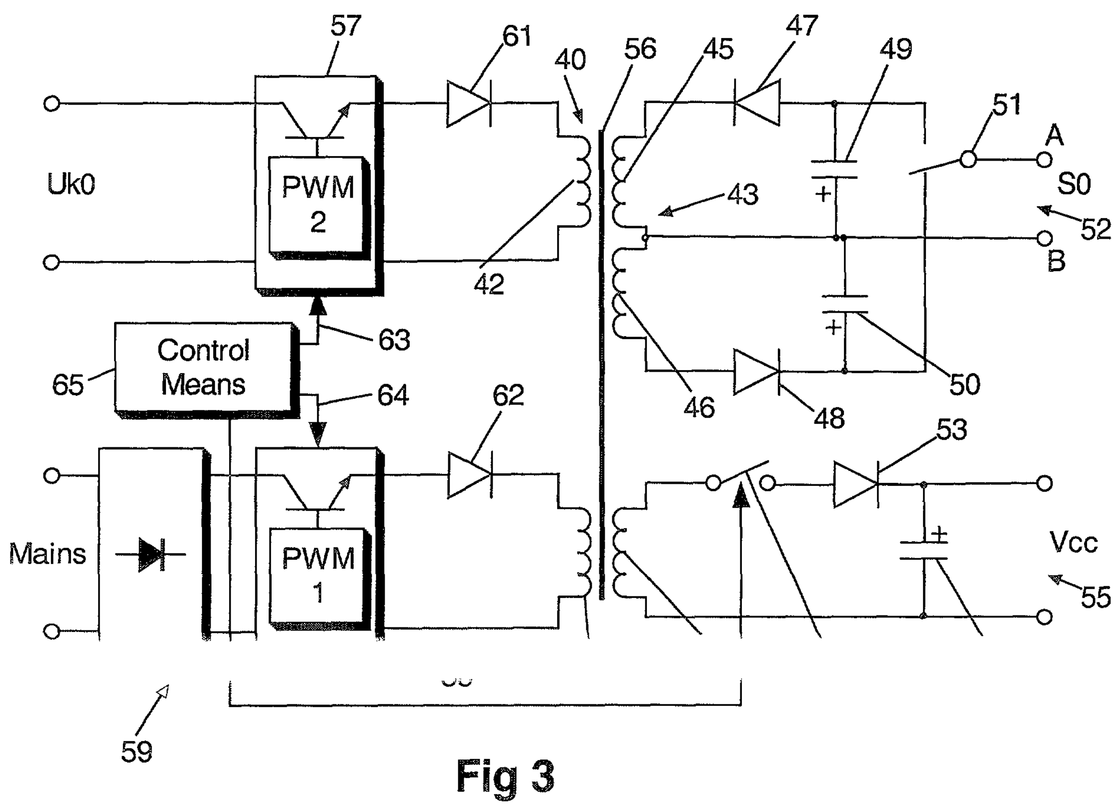
57
61
40
56
45
47
49
51
A
S0
52
B
Uk0
PWM
2
43
42
Control
Means
63
64
65
62
46
48
50
53
Mains
PWM
1
Vcc
55
59

Fig 3

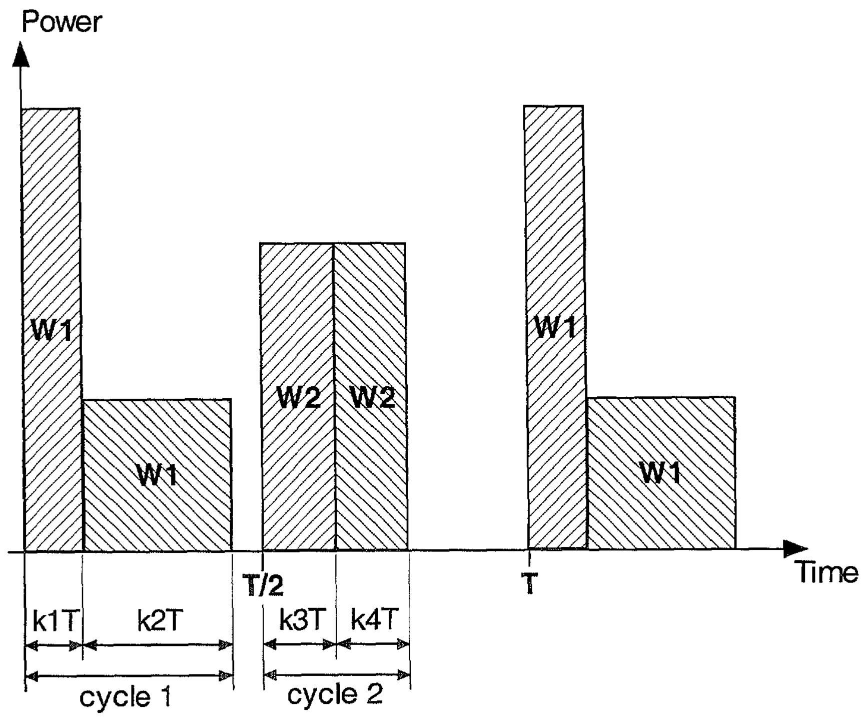
Power
W1
W1
W2
W2
W1
W1
Time
T/2
T
k1T
k2T
k3T
k4T
cycle 1
cycle 2

Fig 4

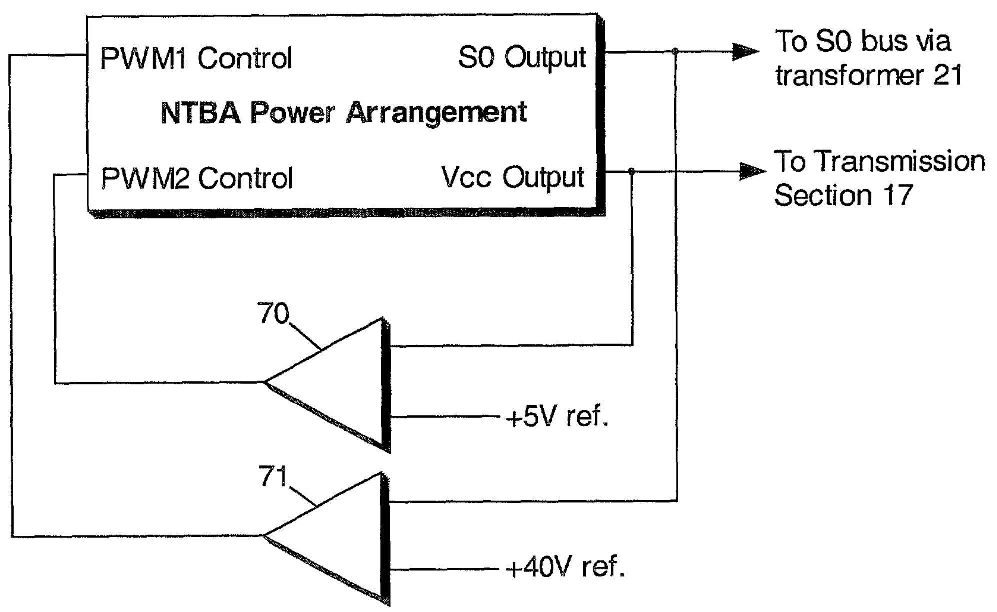
PWM1 Control
S0 Output
NTBA Power Arrangement
PWM2 Control
Vcc Output
To S0 bus via transformer 21
To Transmission Section 17
70
+5V ref.
71
+40V ref.

Fig 5

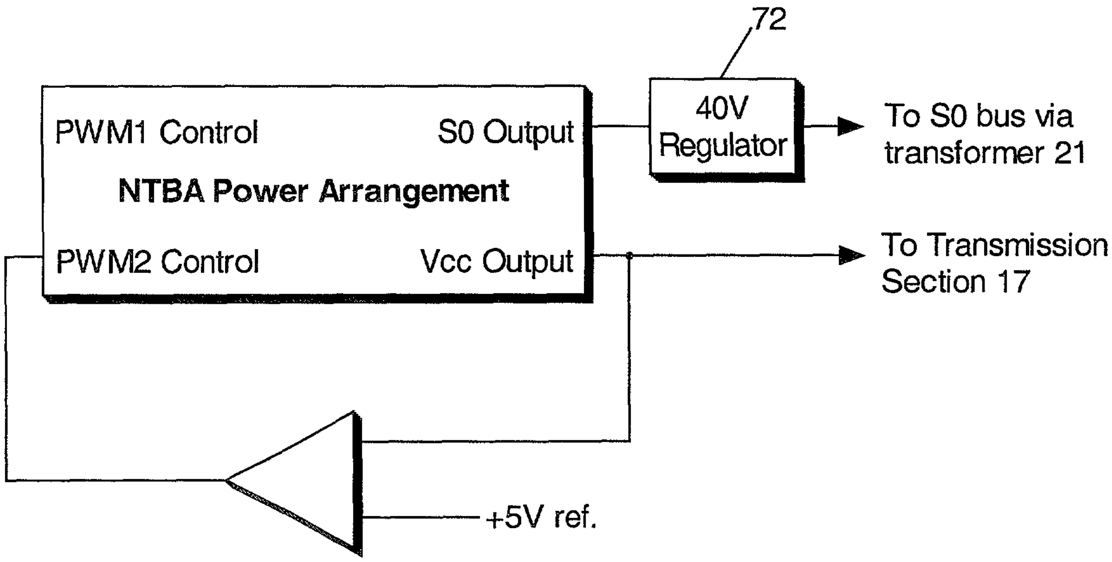
72
PWM1 Control
S0 Output
NTBA Power Arrangement
PWM2 Control
Vcc Output
40V
Regulator
To S0 bus via
transformer 21
To Transmission
Section 17
+5V ref.

Fig 6

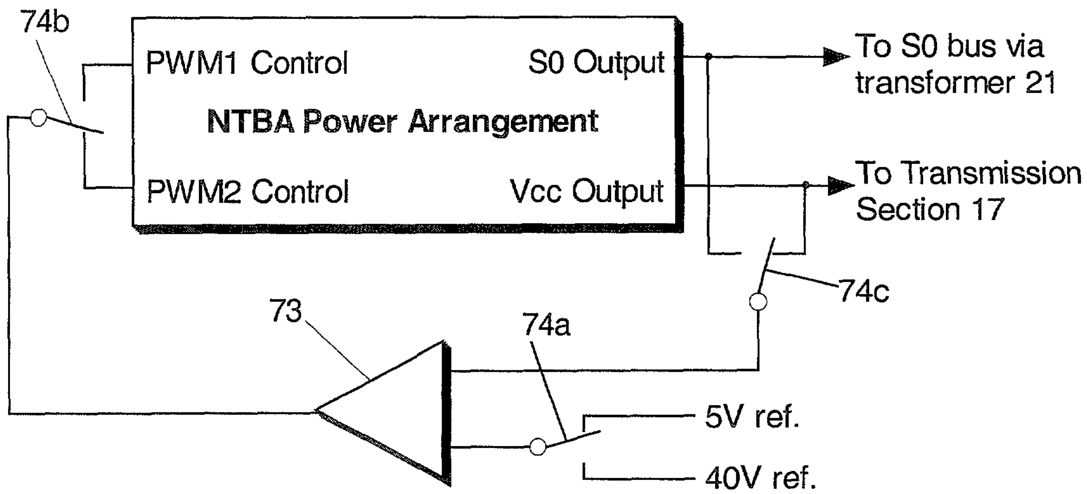
74b
PWM1 Control
S0 Output
NTBA Power Arrangement
PWM2 Control
Vcc Output
To S0 bus via
transformer 21
To Transmission
Section 17
74c
73
74a
5V ref.
40V ref.

Fig 7

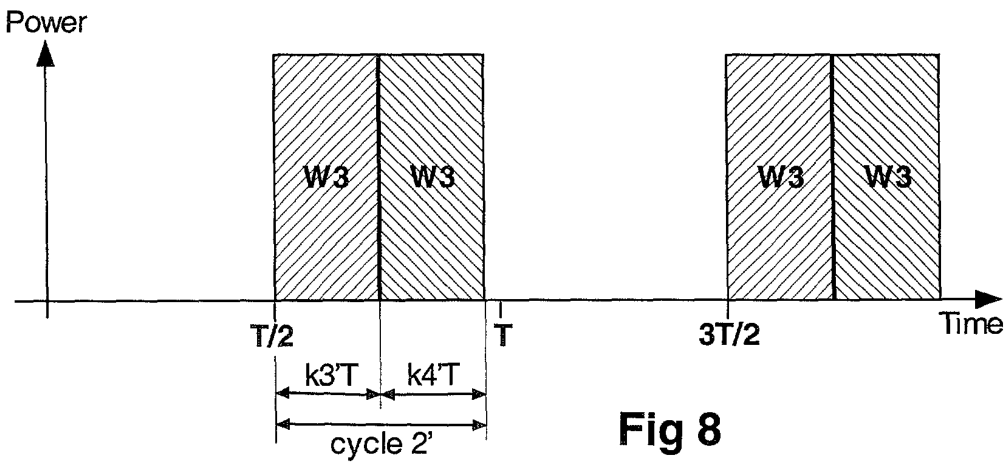


Fig 8

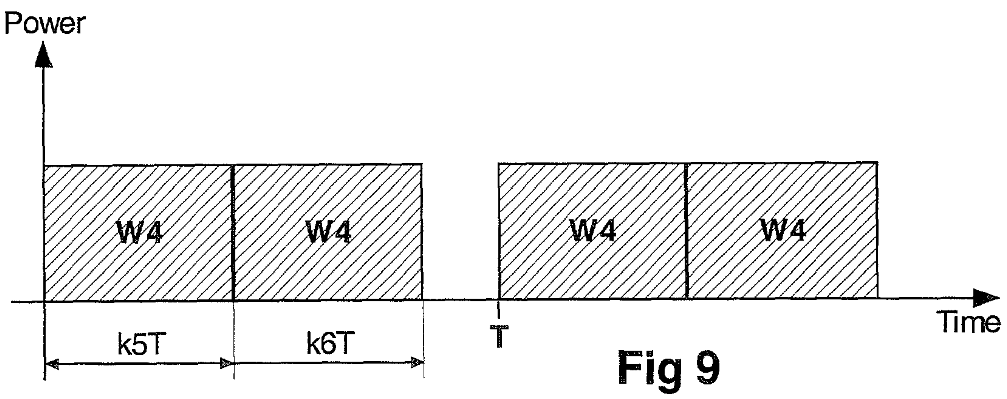


Fig 9

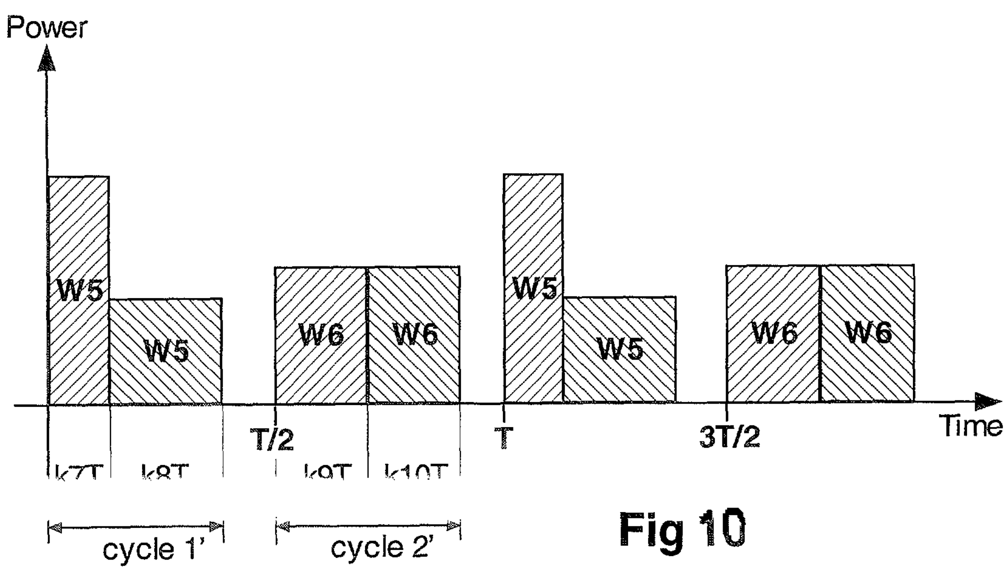


Fig 10

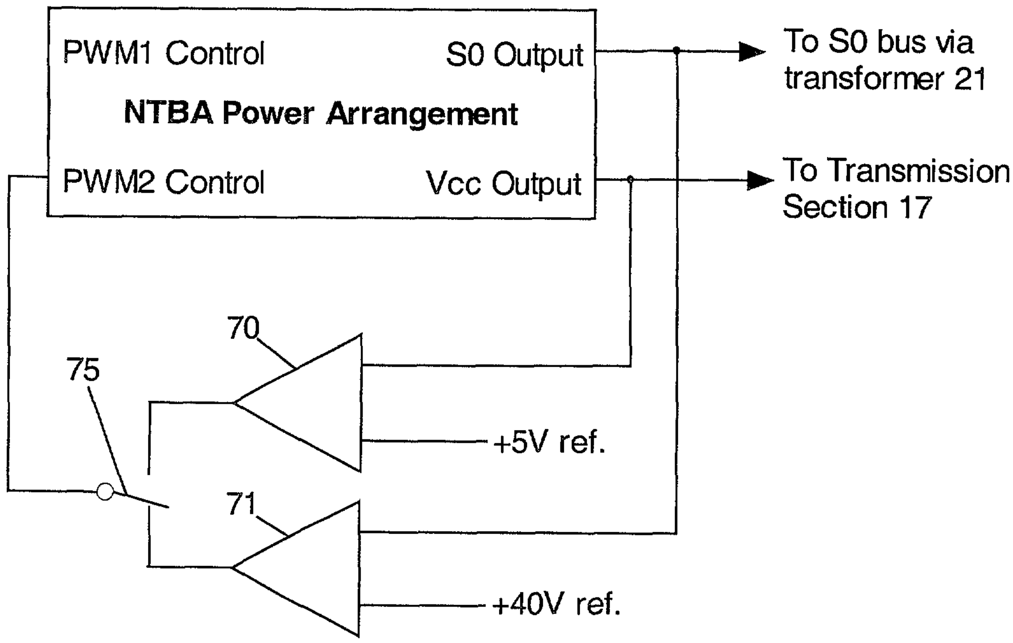
PWM1 Control
S0 Output
NTBA Power Arrangement
PWM2 Control
Vcc Output
To S0 bus via transformer 21
To Transmission Section 17
70
75
+5V ref.
71
+40V ref.

Fig 11

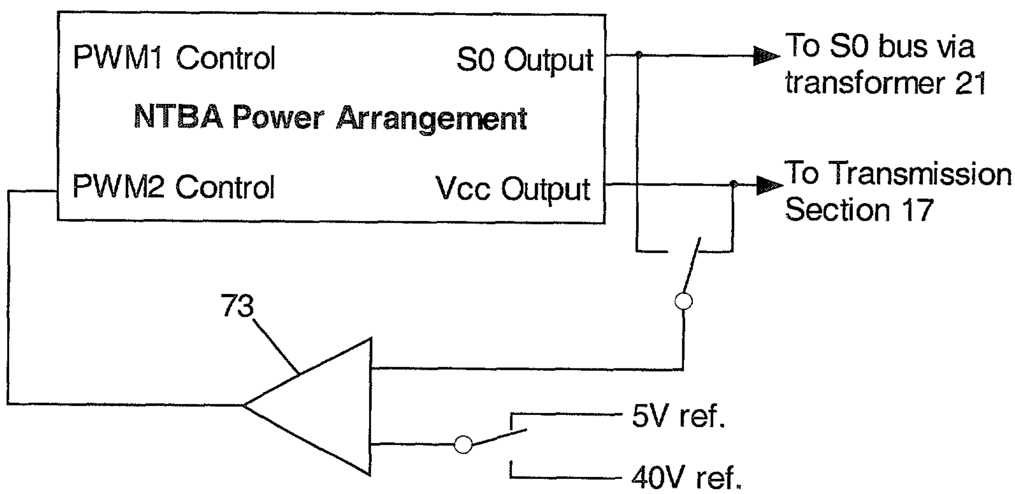
PWM1 Control
S0 Output
NTBA Power Arrangement
PWM2 Control
Vcc Output
To S0 bus via transformer 21
To Transmission Section 17
73
5V ref.
40V ref.

Fig 12

European Patent Office

# EUROPEAN SEARCH REPORT

Application Number
EP 01 10 1580

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 745 299 A (ENG WING K ET AL) 17 May 1988 (1988-05-17) * claim 1; figure 4 * --- | 1-27 | H02J9/06 |
| A | GB 2 120 474 A (HARMER & SIMMONS LTD) 30 November 1983 (1983-11-30) * page 1, line 109 - page 2, line 113; figure 3 * --- | 1-27 | |
| A | US 5 781 422 A (LAVIN JAMES VINCENT ET AL) 14 July 1998 (1998-07-14) * column 3, last paragraph - column 6, paragraph 5; figure 1 * ----- | 1-27 | |
| | | | TECHNICAL FIELDS SEARCHED (Int.Cl.7) |
| | | | H02J |

The present search report has been drawn up for all claims

| Place of search | Date of completion of the search | Examiner |
|---|---|---|
| THE HAGUE | 10 July 2001 | Moyle, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 10 1580

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2001

| Patent document cited in search report | Publication date | Patent family member(s) | Publication date |
|---|---|---|---|
| US 4745299 A | 17-05-1988 | CA 1314932 A | 23-03-1993 |
| | | DE 3786366 A | 05-08-1993 |
| | | DE 3786366 T | 14-10-1993 |
| | | EP 0243061 A | 28-10-1987 |
| | | JP 62296728 A | 24-12-1987 |
| GB 2120474 A | 30-11-1983 | NONE | |
| US 5781422 A | 14-07-1998 | AU 1420795 A | 01-08-1995 |
| | | EP 0739546 A | 30-10-1996 |
| | | WO 9519654 A | 20-07-1995 |

EPO FORM P0459

For more details about this annex : see Official Journal of the European Patent Office, No. 12/82